# EUROPEAN PATENT APPLICATION

(11) **EP 2 806 402 A1**
(43) Date of publication of application: **26.11.2014**
(21) Application number: 14156175.3
(22) Date of filing: 21.02.2014
(51) Int. Cl.: G06T 11/00, G06T 7/00, G06T 5/00

(54) **Applying different visual effects to object and background in camera live view image frames**

(30) Priority: 23.05.2013 KR 20130058599
(71) Applicant: Samsung Electronics Co., Ltd., Suwon-si Gyeonggi-do 443-742 (KR)
(72) Inventor: Kang, Tae-hoon, Gyeonggi-do (KR)
(74) Representative: Instone, Terry

(57) **Abstract**

An image display method includes displaying a captured image, if an object, which is included in the captured image that is displayed, is selected, detecting a boundary of the selected object, discriminating between the object and a remaining image region other than the object based on the detected boundary of the object, and discriminatingly displaying the object through application of different effects to the object and the remaining image region.

## Description

### BACKGROUND OF THE INVENTION

### 1. Field of the Invention

The present general inventive concept relates to an image processing method, and more particularly to an image display method, an image display apparatus, and a recording medium, which can apply effects to an object that is included in a captured image.

### 2. Description of the Related Art

Various conventional technologies that allow a user to edit digital captured images in accordance with the user's preference have been developed. In particular, conventional technologies that enable a user to capture an image using a smart phone or a digital camera and to apply effects, such as a sketch effect, a blur effect, and an oil painting effect, to the captured image.

The conventional image-editing technologies invented include a technology that collectively applies effects to the whole captured image or to objects having the same color as the color of an object selected by a user among objects included in the captured image, a technology that collectively applies effects to an image region having the same color as the color selected by a user, and the like.

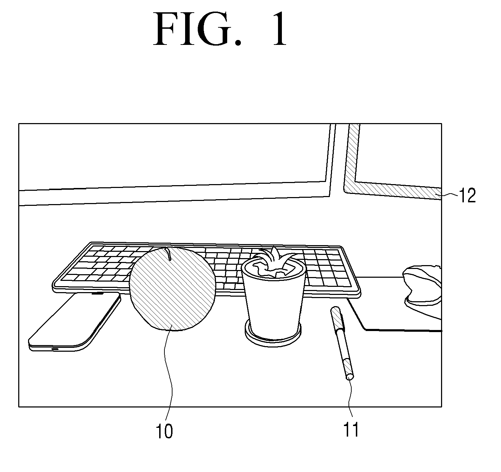

FIG. 1 illustrates an image in which an effect has been applied to an object having the same color as the color selected from the captured image in the related art. In FIG. 1, upper and lower regions of an apple 10 and a pen 11, and a corner of a monitor 12 are regions having the same color as the selected color, to which a predetermined effect has been applied, and a different effect or no effect has been applied to the remaining image region.

As described above, in the related art, a method of applying an effect only to a specific object that is desired by a user has not been proposed. Particularly, in the case of the live view technology, it is difficult to apply effects by specific regions with respect to all image frames of the live view, and only a simple effect can be applied, such as applying a color filter only to the whole image or collectively applying an effect only with respect to a selected color.

Accordingly, an image processing technology is required, which can selectively apply an effect to a specific object desired by a user. Further, it is required to satisfy various user needs through providing of such a function even within a live view.

### SUMMARY OF THE INVENTION

According to the present invention there is provided an apparatus and method as set forth in the appended claims. Other features of the invention will be apparent from the dependent claims, and the description which follows.

The present general inventive concept provides an image display method, an image display apparatus, and a recording medium, which can selectively apply an effect to a specific object that is desired by a user and provide such a function even within a live view.

Additional features and utilities of the present general inventive concept will be set forth in part in the description which follows and, in part, will be obvious from the description, or may be learned by practice of the general inventive concept.

The foregoing and/or other features and utilities of the present general inventive concept are achieved by providing image display method including displaying a captured image, and if an object, which is included in the captured image that is displayed, is selected, detecting a boundary of the selected object.

The image display method may further include discriminating between the object and a remaining image region other than the object based on the detected boundary of the object, and discriminatingly displaying the object through application of different effects to the object and the remaining image region.

The step of detecting the boundary of the object may divide the displayed captured image into a plurality of segments, and detect the boundary of the object based on pixel values corresponding to the respective segments.

The step of discriminating between the object and the remaining image region may include generating a mask image through binarization of the object and the remaining image region based on the detected boundary of the object, and correcting a noise that exists in the object detected from the generated mask image.

The step of displaying the object may include applying a first effect to the object included in the captured image using the corrected mask image, and applying a second effect to the remaining image region using the corrected mask image.

The applied effect may be at least one of a grey color effect, a sepia tone effect, a sketch effect, an old film effect, a blur effect, an oil painting effect, a watercolor effect, a mosaic effect, and an abstraction effect.

In the image display method, if each of a plurality of objects included in the displayed captured image is selected, the above-described steps may be independently performed with respect to the selected one of the plurality of objects.

The image display method may further include if the captured image is an image frame constituting a live view image, newly detecting a boundary through tracking of the selected object in a next captured image, discriminating between the object and a remaining image region in the next captured image based on the newly detected boundary of the object, and discriminatingly displaying the object through application of different effects to the object and the remaining image region in the next captured image.

The step of detecting the boundary of the object may recognize that the object included in an arbitrary region specified on the captured image is selected if a user input, such as a user drag input, is made to specify the arbitrary region.

The step of detecting the boundary of the object may include determining a region having a pixel value in a predetermined range based on a pixel value of a selected point of the object as the same object, wherein the boundary of the object is detected in a method of gradually increasing or decreasing the predetermined range.

There may be various technical means for selecting objects. A user may touch a region of a touch screen that corresponds to the display panel on which the object is displayed (e.g. by hand or by stylus). That is, the user may perform a direct touch with respect to a position and/or location of the object on the touch screen. In this case, the object that is displayed on the touched region may be selected. Alternatively, or additionally, an image display apparatus may include a proximity sensor. The proximity sensor may sense that a user's hand or a stylus pen approaches the image display apparatus. That is, if the user's hand or the stylus pen approaches an object included in the captured image that is displayed through the image display apparatus, the corresponding object may be selected.

The foregoing and/or other features and utilities of the present general inventive concept may also be achieved by providing an image display apparatus including a display configured to display a captured image, a boundary detector configured to detect a boundary of a selected object if the object, which is included in the captured image that is displayed, is selected, an object discriminator configured to discriminate between the object and a remaining image region other than the object based on the detected boundary of the object, and an effect processor configured to discriminatingly display the object through application of different effects to the object and the remaining image region.

The boundary detector may divide the displayed captured image into a plurality of segments, and detect the boundary of the object based on pixel values corresponding to the respective segments.

The object discriminator may generate a mask image through binarization of the object and the remaining image region based on the detected boundary of the object, and correct a noise that exists in the object detected from the generated mask image.

The effect processor may apply a first effect to the object included in the captured image using the corrected mask image, and apply a second effect to the remaining image region using the corrected mask image.

The applied effect may be at least one of a grey color effect, a sepia tone effect, a sketch effect, an old film effect, a blur effect, an oil painting effect, a watercolor effect, a mosaic effect, and an abstraction effect.

In the image display apparatus, if each of a plurality of objects included in the displayed captured image is selected, the boundary detection, the object discrimination, and the effect application may be independently performed with respect to the selected one of the plurality of objects.

In the image display, if the captured image is an image frame constituting a live view image, the boundary detector may newly detect a boundary through tracking of the selected object in a next captured image, the object discriminator may discriminate between the object and a remaining image region in the next captured image based on the newly detected boundary of the object, and the effect processor may discriminatingly display the object through application of different effects to the object and the remaining image region in the next captured image.

The boundary detector may recognize that the object included in an arbitrary region specified on the captured image is selected if a user input, such as a user drag input, is made to specify the arbitrary region.

The image display apparatus may be a digital camera.

The boundary detector may determine a region having a pixel value in a predetermined range based on a pixel value of a selected point of the object as the same object, and detects the boundary of the object in a method of gradually increasing or decreasing the predetermined range

The foregoing and/or other features and utilities of the present general inventive concept may also be achieved by providing a recording medium is a non-transitory computer-readable recording medium having embodied thereon a computer program to perform an image display method, wherein the method includes: displaying a captured image, if an object, which is included in the captured image that is displayed, is selected, detecting a boundary of the selected object, discriminating between the object and a remaining image region other than the object based on the detected boundary of the object, and discriminatingly displaying the object through application of different effects to the object and the remaining image region.

The foregoing and/or other features and utilities of the present general inventive concept may also be achieved by providing an image display apparatus to photograph at least one object, including a display to display a captured image including the at least one object, an object discriminator to discriminate between the at least one object and a remaining region of the captured image, and an effect processor to apply a user-selected effect to at least one of the at least one object and the remaining region of the captured image .

Different user-selected effects may be applied to multiple objects within the captured image if there is more than at least one object within the captured image.

The image display apparatus may further include a boundary detector to detect a boundary of the at least one object within the captured image based on a user selection of the at least one object.

The object discriminator may perform the discrimination based on the detected boundary.

The detected boundary may be defined by a location on the captured image selected by at least one of a user-touch, a stylus pen-touch, a user-approach, and a stylus-pen approach.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view illustrating an image in which an effect has been applied to an object having the same color as the color selected from the captured image in the related art;
FIG. 2 is a block diagram illustrating the configuration of an image display apparatus according to an exemplary embodiment of the present general inventive concept;
FIG. 3 is a view illustrating a captured image in which an object included in the captured image is selected and different effects have been applied to the object and a remaining region according to an exemplary embodiment of the present general inventive concept;
FIG. 4 illustrates examples of removing a noise of a mask image according to an exemplary embodiment of the present general inventive concept;
FIG. 5 is a view illustrating a captured image in which an object included in the captured image is selected and effects have been applied to a plurality of objects according to an exemplary embodiment of the present general inventive concept;
FIG. 6 is a view illustrating a method of selecting an object included in a captured image according to an exemplary embodiment of the present general inventive concept;
FIG. 7 illustrates captured images that correspond to four successive frames of a live view image according to an exemplary embodiment of the present general inventive concept; and
FIG. 8 is a flowchart of an image display method according to various exemplary embodiments of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

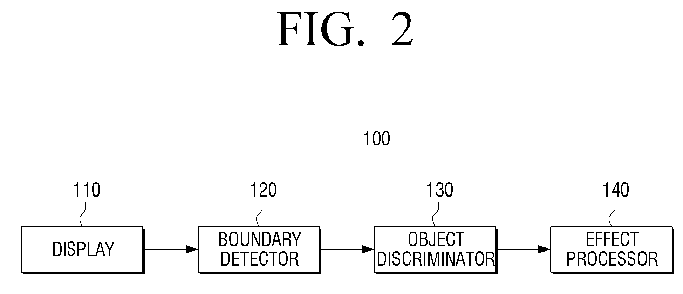

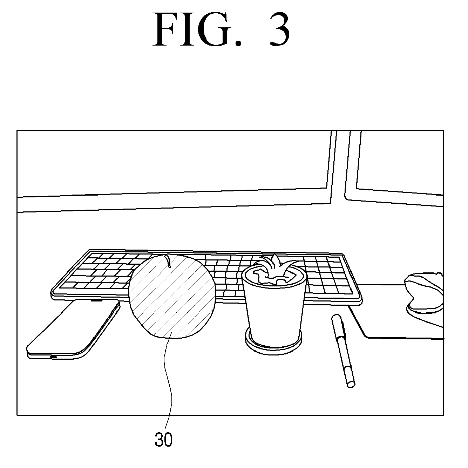

FIG. 2 is a block diagram illustrating a configuration of an image display apparatus 100 according to an exemplary embodiment of the present general inventive concept, and FIG. 3 is a view illustrating a captured image in which an object included in the captured image is selected and different effects have been applied to the object and a remaining region according to an exemplary embodiment of the present general inventive concept.

Referring to FIG. 2, the image display apparatus 100 according to an exemplary embodiment of the present general inventive concept includes a display 110, a boundary detector 120, an object discriminator 130, and an effect processor 140.

The display 110 is configured to display a captured image thereupon. Here, the captured image denotes an image obtained by photographing shapes in the real world using an image sensor. For example, the captured image may be a scene photo, a photo of person, or a photo of an object, and may include an image that is directly photographed using the image display apparatus 100 and an image that is photographed by another electronic device and is received by and stored within the image display apparatus 100. However, the captured image is different from a web scene or a window scene, which includes various icons.

The display 110 may have a configuration of a conventional display, and may operate in a same manner as the conventional display. First, the display 110 processes an image and displays the processed image. Accordingly, the display 110 may include a signal processing module (not illustrated) therein. The signal processing module may include at least one of an audio/video (A/V) decoder (not illustrated), a scaler (not illustrated), a frame rate converter (not illustrated), and a video enhancer (not illustrated). The A/V decoder separates and decodes audio and video data, and the scaler matches an aspect ratio of the captured image in which an object is displayed. The video enhancer removes deterioration or noise from the image. The processed image is stored in a frame buffer, and is transferred to a display module in accordance with frequencies set by the frame rate converter. Further, the signal processing module may include functions of the boundary detector 120, the object discriminator 130, and the effect processor 140 to be described later. That is, the configurations to be described later may be implemented by the configuration of the signal processing module.

The display module (not illustrated) may include a circuit configuration that outputs an image to a display panel (not illustrated), and may include a timing controller (not illustrated), a gate driver (not illustrated), a data driver (not illustrated), and a voltage driver (not illustrated).

The timing controller (not illustrated) generates a gate control signal (scanning control signal) and a data control signal (data signal), and rearranges input R, G, and B data to supply the rearranged R, G, and B data to the data driver (not illustrated).

The gate driver (not illustrated) may apply a gate on/off voltage Vgh/Vgl, which is provided from the voltage driver according to the gate control signal generated by the timing controller, to the display panel.

The data driver (not illustrated) may complete scaling according to the data control signal that is generated by the timing controller (not illustrated), and inputs the R, G, and B data of an image frame to the display panel.

The voltage driver (not illustrated) may generate and transfer respective driving voltages to the gate driver, the data driver, and the display panel.

Since the respective configurations of the display module are not essential technical features of the present general inventive concept, a detailed description thereof will be omitted.

The above-described display panel may be designed through various technologies. That is, the display panel may be configured by any one of an OLED (Organic Light Emitting Display), an LCD (Light Crystal Display) panel, a PDP (Plasma Display Panel), a VFD (Vacuum Fluorescent Display), an FED (Field Emission Display), and an ELD (Electro Luminescence Display), but is not limited thereto. The display panel is mainly made of a light emission type, but does not exclude reflective displays (E-ink, P-ink, and photonic crystal). Further, the display panel may be implemented by a flexible display or a transparent display. Further, the display panel may be implemented by a multi-display device 100 having two or more display panels.

The boundary detector 120 may detect a boundary of a selected object if the object included in the displayed captured image is selected.

Here, the "object" may include one region of the image included in the captured image that is displayed on the screen and can be recognized by the naked eye. For example, an apple 10, a pen 11, and a monitor bezel 12, which are included in the captured image as illustrated in FIG. 1, are individual objects included in the captured image.

There may be various technical means of selecting objects. In an exemplary embodiment of the present general inventive concept, the image display apparatus 100 may include a touch screen (not illustrated). At this time, since the touch screen is stacked on the display panel of the display 110, a user can touch a region of the touch screen that corresponds to the display panel on which the object is displayed. That is, the user can perform a direct touch with respect to a position and/or location of the object on the touch screen. In this case, the object that is displayed on the touched region is selected. According to the implementation type, the touch screen may be included in the configuration of the display 110. The touch screen may be implemented as at least one of a capacitive touch screen and a piezoelectric touch screen.

In another exemplary embodiment of the present general inventive concept, the image display apparatus 100 may include a proximity sensor. The proximity sensor may sense that a user's hand or a stylus pen approaches the image display apparatus 100. That is, if the user's hand or the stylus pen approaches an object included in the captured image that is displayed through the image display apparatus 100, the corresponding object may be selected.

In addition, various technical means of selecting an object may be considered, and the technical idea of the present general inventive concept is not limited to any specific technical means.

If an object that is included in the displayed captured image is selected, the boundary detector 120 detects the boundary of the selected object. As illustrated in FIG. 3, if an apple 30, which is an object included in the captured image, is selected, the boundary of the apple 30 is detected.

The boundary detection may be performed through a flood fill algorithm in order to find the boundary through calculation of a pixel distance (difference of YCbCr) in upper, lower, left, and right directions about specific coordinates (x, y). The flood fill algorithm is an algorithm that is called a seed fill and determines a portion that is connected to a designated position in a multi-dimensional arrangement. In general, the flood fill algorithm receives three parameters of a start node, a target color, and a replace color. This algorithm changes the target color to the replace color while following all nodes of the arrangement that is connected to the start node. This algorithm is implemented using a data structure, such as a stack or queue, and in the present disclosure, determines whether any pixel exists in a predetermined pixel value range around the pixel value of the object selection point that is included in the captured image while moving in the upper, lower, left, and right directions. If a pixel that exceeds the predetermined pixel value range is found from the pixel value of the object selection point, this point is basically determined as a boundary region.

In order to detect such a boundary, a boundary expansion/reduction algorithm may be used. The boundary expansion/reduction algorithm is a technique that detects the boundary through gradually increasing or decreasing a pixel value section to which the pixel value of the object selection point belongs. For example, if it is assumed that the pixel value of the object selection point is 40, the range of +10 is set as a first pixel value section, and the range in which the pixel value is 40 to 50 is processed as the same object. Next, the range of +10 to +20 is set as a second pixel value section, and the range in which the pixel value is 50 to 60 is processed as the same object. The boundary expansion technique identifies the same object region while expanding the boundary in the above-described manner. However, if a pixel that exceeds the predetermined range is found, it is recognized as a separate object rather than the same object region. The boundary reduction technique operates in reverse. The boundary expansion/reduction algorithm detects the object region having the dominant pixel value (range) in this manner.

However, a plurality of pixels that correspond to a region that actually indicates one object is not composed of only the dominant pixel value, but include the pixel value region that greatly exceeds the dominant pixel value in the predetermined range, and such a noise should be considered. For example, the apple 30 illustrated in FIG. 3 may have a bright region from which light is reflected, and this region should also be processed as a partial image that includes the apple 30. That is, a logic that does not determine such a region as a boundary, and it is possible to process such a region using a labeling technique to be described later.

The implementation of the boundary detection is not limited to the above-described flood fill algorithm. That is, various algorithm techniques, such as normalized cut or graph cut, may be applied.

Further, the boundary detector 120 may also divide the displayed captured image into a plurality of segments and detect the boundary of the object based on pixel values corresponding to the respective segments. When the captured image has a high resolution, this configuration may perform the boundary detection in the unit of a segment that is tied in the unit of a plurality of pixels, and thus delay of the processing speed can be minimized.

If the boundary detection is completed, the object discriminator 130 discriminates between the object and the remaining image region other than the object based on the detected boundary of the object. An operation of the object discriminator 130 may be actually included in an operation of the boundary detector 120 as described above. If the object is discriminated from the remaining image region, a mask image is generated based on this. Specifically, the object discriminator 130 generates the mask image through binarization of the object and the remaining image region based on the detected boundary of the object. Since the object and the remaining image region can be completely discriminated from each other in the generated mask image, it is possible to apply different effects to the object and the remaining image region.

The effect processor 140 is a configuration that discriminatingly displays the object through application of different effects to the object and the remaining image region. Specifically, the different effects can be applied to the object and the remaining image region using the mask image as described above.

That is, the effect processor 140 may apply a first effect to the object included in the captured image using the mask image, and apply a second effect to the remaining image region using the mask image. Actually, the mask image may be applied as a weight value when an initial captured image and a filter to apply the effect are synthesized. For example, the pixel value may be set to "1" in the object or the remaining image region to apply the effect, and the pixel value may be set to "0" in other regions. In this case, in the region where the pixel value is set to "0", the weight value becomes "0", resulting in that no effect is applied, while in the region where the pixel value is set to "1", the effect is perfectly applied. As illustrated in FIG. 3, the effect processor 140 processes the remaining image region with no color while maintaining the color of the apple 30.

As described above, in a state where the color of the selected object is maintained as it is, the remaining image region may be processed with no color, or another effect may be applied to the remaining image region. For example, with respect to the object or the remaining image region, at least one of a grey color effect, a sepia tone effect, a sketch effect, an old film effect, a blur effect, an oil painting effect, a watercolor effect, a mosaic effect, and an abstraction effect may be applied. Through this, the object can be discriminatingly displayed. By contrast, the remaining image region may be discriminatingly displayed.

On the other hand, the image display apparatus 100 according to the present general inventive concept may provide a user interface to apply the above-described effect. That is, the display 110 may display a menu to a user to select various effects as described above, and if the user selects at least one of the effects, the selected effect can be applied to at least one of the object and the remaining image region.

Since the object does not have only one dominant pixel value as described above, correction is sometimes necessary to generate a complete mask image. The following exemplary embodiment of the present general inventive concept refers to correction of a mask image.

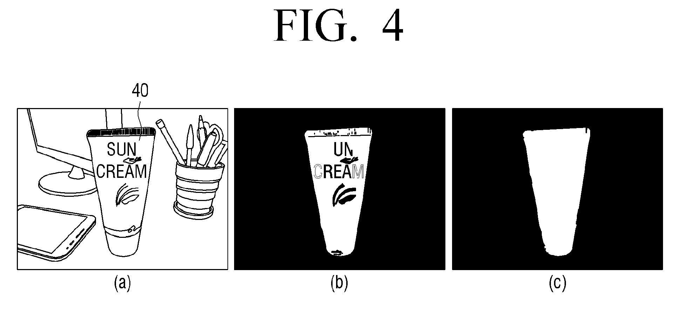

FIG. 4 illustrated examples of removing a noise of a mask image according to an exemplary embodiment of the present general inventive concept.

Referring to views (a) through (c) of FIG. 4, an object sun cream 40 being selected from a captured image A is illustrated. In view (b) if FIG. 4, the boundary of the sun cream 40 is detected according to the above-described method, and a mask image that is generated after the object is discriminated has a partial noise. Since this partial noise causes an effect not to be uniformly applied to the object, it is necessary to remove the noise. As illustrated in view (c) of FIG. 4, the object discriminator 130 corrects and removes the noise that exists in the detected object in the generated mask image, and obtains the complete mask image.

The noise of the mask image may be called a "blob," and the noise can be removed in the unit of blobs using a labeling technique. In the mask image, "0" may denote black, and "1" may denote white. Black blobs in a white region of a main object can be removed through changing the blobs, the number of which is smaller than the predetermined number of pixels, to "1". For example, if the number of blob pixels having the value of "0" is smaller than 500, the pixels having the value of "0" can be changed to "1". If the mask image is inverted, a portion having the value of "1" in the remaining image region is changed to "0", and thus the noise in the remaining image region can also be removed.

Hereinafter, an exemplary embodiment in which the above-described effect process is individually performed with respect to the plurality of objects included in the captured image will be described.

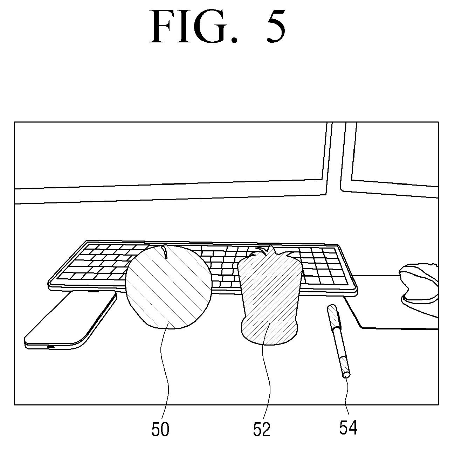

FIG. 5 is a view illustrating a captured image in which an object included in the captured image is selected and effects have been applied to a plurality of objects according to an exemplary embodiment of the present general inventive concept.

A user may perform the above-described image process through selection of any one object included in the captured image, and then select another object included in the same captured image or an image of which processing is completed. In this case, independently of the initially selected object, the boundary detection, the object discrimination, and the effect application may be performed with respect to another selected object. Further, the effect processing of the objects may be performed at a time after selection of the objects is completed. Further, different effect processes may be performed with respect to the respective selected objects. In FIG. 5, an apple 50, a flowerpot 52, and a pen 54 may be displayed with colors of the initial captured image, and the remaining image region may be processed with no color. Further, the apple 50, the flowerpot 52 and the pen 54 may be displayed with the same color, and the remaining image region may be processed with no color. Similarly, with respect to the respective objects or the remaining image region, at least one of a grey color effect, a sepia tone effect, a sketch effect, an old film effect, a blur effect, an oil painting effect, a watercolor effect, a mosaic effect, and an abstraction effect may be independently applied. Through this, the object can be discriminatingly displayed. By contrast, the remaining image region may be discriminatingly displayed.

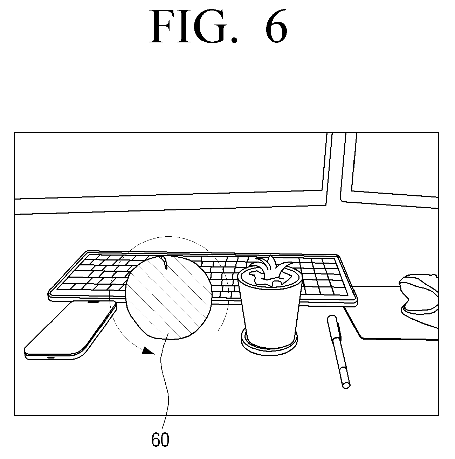

FIG. 6 is a view illustrating a method of selecting an object included in a captured image according to an exemplary embodiment of the present general inventive concept.

The object selection technology may be proximity sensing through a touch on the touch screen or a proximity sensor as described above, and such touch or proximity input includes an input by a drag. That is, if a user drag input to specify an arbitrary region on the captured image is made, the boundary detector 120 may recognize that an object included in the specific region is selected. If there is hovering in a region that includes an object in the case of the drag input by proximity, it may be recognized that the object included in the hovering region is selected. As illustrated in FIG. 6, a user drag input may be made in an arbitrary region of the captured image, and an apple 60 may be selected through the user drag input. Since this input method functions to set a limit of a region where the captured object is located, a boundary detection error is reduced.

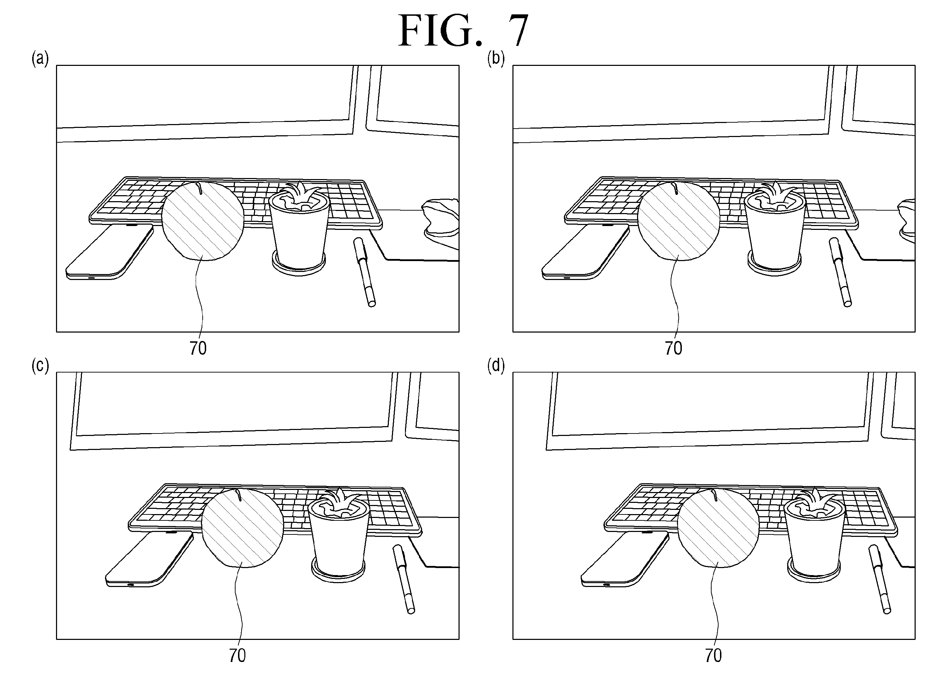

Furthermore, the above-described captured image may be an image frame that includes a live view image. An exemplary embodiment of the present general inventive concept illustrated in FIG. 7.

Although not illustrated in the drawing, in this case, the image display apparatus 100 further includes a storage (not illustrated) for storing the captured image.

The storage may store the captured image. That is, the storage may store image frames that include a live view image. More specifically, a live-view image may include an image that is viewable by the user in real-time, such that the display 110 displays a different image as the image display apparatus 100 moves. As such, the storage may convert the captured image into a form that is efficient in storage to store the converted image. The storage may be implemented in various technologies, and for example, may include a memory, a HDD (Hard Disk Drive), and a BD (Blu-ray Disk), but is not limited thereto. In particular, a nonvolatile memory, such as an EEPROM (Electrically Erasable and Programmable ROM), may be used to store the captured image to process the captured image. The stored captured image is read in order to track the object in the next image frame.

The boundary detector 120 tracks the selected object that is included in the captured image in the next captured image that include the live view. The tracking of the object is performed by searching for a region having high similarity to the object pixel value on the next captured image. In the case of the live view, the pixel value of the object boundary region may not be completely equal to the previous captured image according to the capturing image, and the boundary detection is performed again with respect to the tracked captured image.

The reason why the object tracking is performed with respect to the next captured image is that the user may not select the same object included in the next image. For example, in the case where the image display apparatus 100 is a digital camera, if the image is captured in real time and is displayed as a live view on the display 110, the object selection is made with respect to the initially displayed captured image, and then the display 110 displays the next captured image. In this case, according to the above-described method of the present general inventive concept, an effect is applied to the initial captured image to be displayed, and then no effect is applied to the next captured image to be displayed to cause a problem. Since a user may desire to continuously apply the desired effect to the live view image only through once selection, the object tracking in the above-described method would be necessary.

The object discriminator 130 discriminates the object and the remaining image region from the next captured image based on the boundary of the object newly detected. Then, the effect processor 140 discriminatingly displays the object through application of different effects to the object and the remaining image region in the next captured image. As a result, if the selection is once made with respect to 9 the object included in one captured image that constitutes the live view, the image display apparatus 100 applies the same effect to the displayed live view image while tracking the same object.

In the case where the image display apparatus 100 stores the live view image as a moving image, the storage stores all images obtained by effecting the captured image that corresponds to the image frame constituting the live view, and encodes the images as a moving image.

Views (a) through (d) of FIG. 7 illustrate captured images corresponding four successive frames of the live view image according to an exemplary embodiment of the present general inventive concept. The live view image illustrates that the capturing point is gradually moved to the left. The initial captured image discriminatingly displays an apple 70 (view (a) of FIG. 7), and the next captured image illustrates that the point of the image moves to the left while discriminatingly displaying the same apple 70 (view (b) of FIG. 7). In the same manner, the successive captured images are displayed (views (c) and (d) of FIG. 7).

The image display apparatus 100 is an apparatus that includes one or more displays and is configured to execute an application or to display content, and for example, may be implemented by at least one of a digital camera, a digital television, a tablet PC, a personal computer (PC), a portable multimedia player (PMP), a personal digital assistant (PDA), a smart phone, a cellular phone, a digital photo frame, a digital signage, and kiosk, but is not limited thereto.

In particular, the image display apparatus 100 may be effectively used in a digital camera or a smart phone that has a capturing module and provides a live view function.

Hereinafter, a configuration of a digital camera, which is a device that is commonly used to execute functions of the present general inventive concept, will be briefly described. Respective configurations of the digital camera may supplement the respective configurations of the image display apparatus 100 according to the present general inventive concept as described above, and the functions of the present general inventive concept could be completely provided. However, as described above, it is apparent that the present general inventive concept can be applied to various different types of display apparatuses 100 having various different configurations.

The digital camera (not illustrated) according to an exemplary embodiment of the present general inventive concept further includes a capturer (not illustrated), an image processor (not illustrated), and a controller (not illustrated).

The capturer (not illustrated) includes a shutter, a lens portion, in iris, a CCD (Charge Coupled Device) image sensor, and an ADC (Analog-to-Digital Converter). The shutter is a mechanism that adjusts the quantity of light to change the amount of exposure together with an iris. The lens portion receives light from an external light source and processes an image. At this time, the iris adjusts the quantity of incident light according to its opening/closing degree. The CCD image sensor accumulates the quantity of light input through the lens portion, and outputs the image that is captured by the lens portion according the accumulated quantity of light in synchronization with a vertical sync signal. The image acquisition by the digital camera is performed by the CCD image sensor that converts the light that is reflected from an object into an electrical signal. In order to obtain a color image using the CCD image sensor, a color filter is necessary, and the CCD image sensor mostly adopts a filter called a CFA (Color Filter Array). The CFA has a regularly arranged structure which passes only light that indicates one color for each pixel, and has various shapes according to the arrangement structure. The ADC converts an analog image signal that is output from the CCD image sensor into a digital signal.

On the other hand, the above-described image capturing performed by the capturer is merely exemplary, and the image may be captured using other methods. For example, the image may be captured using a CMOS (Complementary Metal Oxide Semiconductor) image sensor rather than the CCD image sensor.

The image processor (not illustrated) processes digital-converted raw data to be displayable under the control of the controller (not illustrated). The image processor removes a black level due to dark current that is generated in the CCD image sensor and the CFA filter that is sensitive to the temperature change. The image processor performs a gamma correction for coding information to match the human eye's non-linearity. The image processor performs CFA interpolation for interpolating a Bayer pattern that is implemented by an RGRG line and a GBGB line of the gamma-corrected data into an RGB line. The image processor converts the interpolated RGB signal into a YUV signal, performs an edge correction to clearly process the image through filtering of a Y signal using a high-band filter and a color correction to correct color values of U and V signals using the standard color coordinate system, and removes their noise. The image processor generates a JPEG file by compressing and processing the noise-removed Y, U, and V signals, and the generated JPEG file is displayed on the display 110 and is stored in the storage. Further, the image processor may include the functions of the boundary detector 120, the object discriminator 130, and the effect processor 140. That is, the above-described configurations may be included in the image processor by software or by hardware.

The controller (not illustrated) controls the whole operation of the digital camera. The controller includes hardware configurations, such as a CPU and a cache memory, and software configurations, such as an operating system and applications to perform specific purposes. Control commands corresponding to the respective elements to operate the digital camera according to a system clock are read from a memory, and electrical signals are generated according to the read control commands to operate the respective hardware constituent elements.

Hereinafter, an image display method according to various exemplary embodiments of the present general inventive concept will be described.

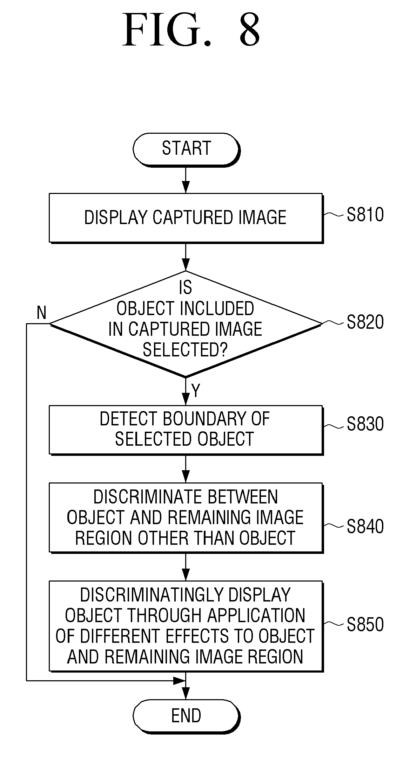

FIG. 8 is a flowchart of an image display method according to various exemplary embodiments of the present general inventive concept.

Referring to FIG. 8, an image display method according to various exemplary embodiments of the present general inventive concept includes displaying a captured image (S810), and if an object that is included in the captured image is selected (S820-Y), detecting a boundary of the selected object (S830). Further, the image display method includes discriminating between the object and a remaining image region other than the object based on the detected boundary of the object (S840), and discriminatingly displaying the object through by applying different effects to the object and the remaining image region (S850).

During the detection of the boundary of the object (S830) the displayed captured image may be divided into a plurality of segments, and the boundary of the object may be detected based on pixel values corresponding to the respective segments.

During the discriminating between the object and the remaining image region (S840), a mask image may be generated through binarization of the object and the remaining image region based on the detected boundary of the object, and a noise that exists in the object detected from the generated mask image may be corrected.

Further, the displaying of the object (S850) may include applying a first effect to the object included in the captured image using the corrected mask image, and applying a second effect to the remaining image region using the corrected mask image.

The applied effect may be at least one of a grey color effect, a sepia tone effect, a sketch effect, an old film effect, a blur effect, an oil painting effect, a watercolor effect, a mosaic effect, and an abstraction effect.

In the image display method, if each of a plurality of objects included in the displayed captured image is selected, the above-described steps may be independently performed with respect to the selected one of the plurality of objects.

The image display method may further include if the captured image is an image frame within a live view of the image, newly detecting a boundary through tracking of the selected object in a next captured image, discriminating between the object and a remaining image region in the next captured image based on the newly detected boundary of the object, and discriminatingly displaying the object through application of different effects to the object and the remaining image region in the next captured image.

Further, the step of detecting the boundary of the object (S830) may include recognizing that the object included in an arbitrary region specified on the captured image is selected if a user drag input is made to specify the arbitrary region.

The present general inventive concept, such as the image display method as described above, can also be embodied as computer-readable codes on a non-transitory computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Further, the image display method as described above may be built in a hardware IC chip in an embedded software type, or may be provided in a firmware type.

According to various exemplary embodiments of the present general inventive concept as described above, the effect can be selectively applied to the specific object that is desired by the user, and such a function can be provided even in the case of the live view.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. An image display method comprising:
displaying a captured image (S810);
if an object, which is included in the captured image that is displayed, is selected (S820), detecting a boundary of the selected object (S830);
discriminating between the object and a remaining image region other than the object based on the detected boundary of the object (S840); and
discriminatingly displaying the object through application of different effects to the object and the remaining image region (S850).

2. The image display method as claimed in claim 1, wherein the step of detecting the boundary of the object (S830) divides the displayed captured image into a plurality of segments, and detects the boundary of the object based on pixel values corresponding to the respective segments.

3. The image display method as claimed in one of claim 1 or claim 2, wherein the step of discriminating between the object and the remaining image region (S840) comprises:
generating a mask image through binarization of the object and the remaining image region based on the detected boundary of the object; and
correcting a noise that exists in the object detected from the generated mask image.

4. The image display method as claimed in claim 3, wherein the step of discriminatingly displaying the object (S850) comprises:
applying a first effect to the object included in the captured image using the corrected mask image; and
applying a second effect to the remaining image region using the corrected mask image.

5. The image display method as claimed in one of claim 1 to claim 4, wherein the applied effect is at least one of a grey color effect, a sepia tone effect, a sketch effect, an old film effect, a blur effect, an oil painting effect, a watercolor effect, a mosaic effect, and an abstraction effect.

6. The image display method as claimed in one of claim 1 to claim 5, further comprising:
if the captured image is an image frame constituting a live view image, newly detecting a boundary through tracking of the selected object in a next captured image;
discriminating between the object and a remaining image region in the next captured image based on the newly detected boundary of the object; and
discriminatingly displaying the object through application of different effects to the object and the remaining image region in the next captured image.

7. The image display method as claimed in one of claim 1 to claim 6, wherein the step of detecting the boundary of the object comprises determining a region having a pixel value in a predetermined range based on a pixel value of a selected point of the object as the same object,
wherein the boundary of the object (S830) is detected in a method for gradually increasing or decreasing the predetermined range.

8. An image display apparatus (100) comprising:
a display (110) configured to display a captured image;
a boundary detector (120) configured to detect a boundary of a selected object if the object, which is included in the captured image that is displayed, is selected;
an object discriminator (130) configured to discriminate between the object and a remaining image region other than the object based on the detected boundary of the object; and
an effect processor (140) configured to discriminatingly display the object through application of different effects to the object and the remaining image region.

9. The image display apparatus (100) as claimed in claim 8, wherein the boundary detector (120) divides the displayed captured image into a plurality of segments, and detects the boundary of the object based on pixel values corresponding to the respective segments.

10. The image display apparatus (100) as claimed in one of claim 8 to claim 9, wherein the object discriminator (130) generates a mask image through binarization of the object and the remaining image region based on the detected boundary of the object, and corrects a noise that exists in the object detected from the generated mask image.

11. The image display apparatus (100) as claimed in claim 10, wherein the effect processor (140) applies a first effect to the object included in the captured image using the corrected mask image, and applies a second effect to the remaining image region using the corrected mask image.

12. The image display apparatus (100) as claimed in one of claim 8 to claim 11, wherein the applied effect is at least one of a grey color effect, a sepia tone effect, a sketch effect, an old film effect, a blur effect, an oil painting effect, a watercolor effect, a mosaic effect, and an abstraction effect.

13. The image display apparatus (100) as claimed in one of claim 8 to claim 12, wherein if the captured image is an image frame constituting a live view image, the boundary detector newly detects a boundary through tracking of the selected object in a next captured image, the object discriminator discriminates between the object and a remaining image region in the next captured image based on the newly detected boundary of the object, and the effect processor discriminatingly displays the object through application of different effects to the object and the remaining image region in the next captured image.

14. The image display apparatus (100) as claimed in one of claim 8 to claim 13, wherein the boundary detector (120) recognizes that the object included in an arbitrary region specified on the captured image is selected if a user drag input is made to specify the arbitrary region.

15. The image display apparatus (100) as claimed in claim 8, wherein the boundary detector (120) determines a region having a pixel value in a predetermined range based on a pixel value of a selected point of the object as the same object, and detects the boundary of the object in a method for gradually increasing or decreasing the predetermined range.
